# EUROPEAN PATENT SPECIFICATION

(11) **EP 4 477 725 B1**
(45) Date of publication and mention of the grant of the patent: **15.10.2025**
(21) Application number: 24172384.0
(22) Date of filing: 25.04.2024
(51) Int. Cl.: C09K 11/02, C09K 11/08, C09C 1/04, C09C 3/06, C09D 5/22, C09C 1/00, C09C 1/02, C09C 1/30, C09C 1/36, C09C 1/40

(54) **COMPOSITIONS AND METHODS FOR CONSERVED AND ENHANCED QUANTUM DOT (QD) FLUORESCENCE**
ZUSAMMENSETZUNGEN UND VERFAHREN FÜR KONSERVIERTE UND VERBESSERTE QUANTENPUNKT-FLUORESZENZ
COMPOSITIONS ET PROCÉDÉS POUR FLUORESCENCE DE POINTS QUANTIQUES CONSERVÉS ET AMÉLIORÉS (QD)

(30) Priority: 18.05.2023 US 202318319761
(43) Date of publication of application: 18.12.2024
(73) Proprietor: The Boeing Company, Arlington, VA 22202 (US)
(72) Inventor: KANDAPALLIL, Binil Itty Ipe, Arlington, 22202 (US); REID, Phillip Charles, Arlington, 22202 (US); KILGORE, Timothy R., Arlington, 22202 (US); BABILO, Peter, Arlington, 22202 (US); RUSSO, Giuseppe A., Arlington, 22202 (US); KELLER, John Gerhard, Arlington, 22202 (US)
(74) Representative: Boult Wade Tennant LLP

(56) References cited:
- WO-A1-2014/087649
- CN-A- 114 231 073
- US-A1- 2006 157 686
- US-A1- 2018 083 158
- CHEN JUNGE ET AL: "Optical properties and radiation stability of SiO2/ZnO composite pigment prepared by co-sintering method", CERAMICS INTERNATIONAL, vol. 48, no. 1, 15 September 2021 (2021-09-15), NL, pages 754 - 759, XP093215696, ISSN: 0272-8842, DOI: 10.1016/j.ceramint.2021.09.155
- MIKHAILOV M.M. ET AL: "Reflective thermal control coating for spacecraft based on ZnO pigment and Li2SiO3 silicate modified by SiO2 nanoparticles", CERAMICS INTERNATIONAL, vol. 49, no. 12, 22 March 2023 (2023-03-22), NL, pages 20817 - 20821, XP093215691, ISSN: 0272-8842, DOI: 10.1016/j.ceramint.2023.03.214
- SHEN GENCAI ET AL: "Solar Paint from TiO 2 Particles Supported Quantum Dots for Photoanodes in Quantum Dot-Sensitized Solar Cells", ACS OMEGA, vol. 3, no. 1, 26 January 2018 (2018-01-26), US, pages 1102 - 1109, XP093212078, ISSN: 2470-1343, Retrieved from the Internet <URL:http://pubs.acs.org/doi/pdf/10.1021/acsomega.7b01761> DOI: 10.1021/acsomega.7b01761

## Description

### TECHNICAL FIELD

The present disclosure generally relates to compositions and methods for enhancing the fluorescence and/or radiance properties of quantum dots.

### BACKGROUND

Quantum dots (QDs) have attracted great interest in many applications like large area displays, sensors, and self-assembly, etc. The effectiveness of quantum dots in these various applications is dependent upon changes in the fluorescence intensity of the quantum dot. Aggregation and inner filter effects of the quantum dots in quantum dot assemblies often results in fluorescence quenching, i.e., a physicochemical process that lowers the intensity of emitted light from fluorescent molecules. Therefore, achieving higher fluorescence intensity from a QD sample by simply increasing the concentration of the QDs is not trivial. Thus, it is desirable to achieve quantum dot assemblies with the highest possible fluorescence for a good signal to noise ratio.

Quantum dots are also useful for optical tracking of long-distance objects. Optical tracking of long distance objects under extreme environmental conditions requires highly radiant tracers possessing high thermal and radiation stability, good wavelength-tunability, and narrow emission bands with full width half maximum (FWHM) suitable for multiplexing. Although a number of fluorescent paints are commercially available, none of them are suitable for use in extreme environments and they do not have sufficient radiance for long distance detection.

Chen Junge ET AL: "Optical properties and radiation stability of SiO2/ZnO composite pigment prepared by co-sintering method", Ceramics International, vol. 48, no. 1, 15 September 2021 (2021-09-15), pages 754-759, in accordance with the abstract, states that thermal control coatings (TCCs) are an essential part of the thermal control systems in the spacecraft. Solar absorptance and emittance are the key performance parameters of TCCs. To develop an ultra-low solar absorption and stable inorganic TCCs for surface radiator, different TCCs were prepared by co-sintering ZnO and SiO2 nanoparticles to form Zn₂SiO₄/SiO₂ pigment in this work, and the optical properties and radiation stability were systematically studied. It is found that the coating based on composite pigment has high reflectivity in the ultraviolet band and excellent optical performance possessing the low solar absorption of 0.06. In addition, the Zn₂SiO₄/SiO₂ coating demonstrates the highest proton and electron radiation stability because that SiO₂ between Zn₂SiO₄ particles acts as the relaxation centre of the defects caused by radiation

MIKHAILOV M.M. ET AL: "Reflective thermal control coating for spacecraft based on ZnO pigment and Li2SiO3 silicate modified by SiO2 nanoparticles", CERAMICS INTERNATIONAL, vol. 49, no. 12, 22 March 2023 (2023-03-22), pages 20817-20821, in accordance with the abstract, states that studies on the optical properties and radiation resistance of thermal control coatings for spacecraft based on zinc oxide pigments (nSiO2 3 wt %) and lithium silicate binder (nSiO2 0.5 wt %) unmodified and modified by SiO2 nanoparticles are presented. Experiments demonstrated that thermal control coatings based on nanoparticle-modified components exposed to electron irradiation (energy E 30 keV, fluence F≤ 7-1016 cm-2) have higher resistance in terms of diffuse reflectance spectra and solar absorptance (a) as compared to other coatings. The prediction of degradation under exposure to an electron spectrum in a geostationary orbit showed a significantly higher radiation resistance of the thermal control coatings based on modified components. The difference Aa, was 1.54, 1.74, 1.88, and 1.95 for 5, 10, 15, and 20 years of electron irradiation, respectively.

US 2018/083158 A1, in accordance with the abstract, states an optical member for a multi-panel display device that includes a first optical member located on a first display device and including optical fibers, a second optical member located on a second display device neighboring the first display device and including optical fibers, and an optical fiber triangular bar located to overlap a region where the first and second optical members are adjacent to each other, and including optical fibers, wherein each of the first and second optical members includes a chamfer portion corresponding to the optical fiber triangular bar at the region where the first and second optical members are adjacent to each other.

US 2006/157686 A1, in accordance with the abstract, states a quantum dot phosphor for light emitting diodes, which includes quantum dots and a solid substrate on which the quantum dots are supported. Also, a method of preparing the quantum dot phosphor is provided. Since the quantum dot phosphor is composed of the quantum dots supported on the solid substrate, the quantum dots do not aggregate when dispensing a paste obtained by mixing the quantum dots with a paste resin for use in packaging of a light emitting diode.

### SUMMARY

This section provides a general summary of the disclosure and is not a comprehensive disclosure of its full scope or all of its features.

There is described herein a composition for a fluorescent coating, comprising a quantum dot-doped metal oxide pigment; an inorganic binder; and water, wherein:
the metal oxide is selected from the oxides of aluminum, titanium, zirconium, lanthanum, magnesium, or combinations thereof, and
the quantum dot comprises semiconductor nanoparticles (10), wherein the semiconductor nanoparticles (10) comprise one or more selected from the group consisting of gallium nitride, gallinium phosphide, gallinium arsenide, indium phosphide, indium arsenide, zinc oxide, zinc sulfide, cadmium sulfide, cadmium selenide, cadmium telluride, lead selenide, lead sulfide, lead telluride, tin telluride, and tin sulfide.

There is described herein a method for making a quantum dot fluorescent coating. The method comprises mixing organic soluble quantum dots in a solvent with a metal oxide; evaporating the solvent to form a dry quantum dot-doped metal oxide pigment; mixing the quantum dot-doped metal oxide pigment with an inorganic binder, and water to form an aqueous quantum dot fluorescent coating; and applying said aqueous quantum dot fluorescent coating to a substrate, wherein:
the metal oxide is selected from the oxides of aluminum, titanium, zirconium, lanthanum, magnesium, or combinations thereof, and
the quantum dot comprises semiconductor nanoparticles (10), wherein the semiconductor nanoparticles (10) comprise one or more selected from the group consisting of gallium nitride, gallinium phosphide, gallinium arsenide, indium phosphide, indium arsenide, zinc oxide, zinc sulfide, cadmium sulfide, cadmium selenide, cadmium telluride, lead selenide, lead sulfide, lead telluride, tin telluride, and tin sulfide.

There is described herein a method for enhancing fluorescence intensity of quantum dots. The method comprises mixing organic soluble quantum dots in a solvent with a metal oxide; evaporating the solvent to form a dry quantum dot-doped metal oxide pigment; mixing the quantum dot-doped metal oxide pigment with an inorganic binder, and water to form a coating comprising quantum dot-doped metal oxide pigments; applying the coating to a substrate to obtain a pigment coated substrate; and illuminating the pigment coated substrate with a light source.

In the compositions and methods of the present disclosure, the quantum dot-doped metal oxide pigment comprises quantum dots assembled and immobilized on surfaces of metal oxide particles. In some examples the quantum dot-doped metal oxide pigment is suspended in a slurry mixture of the water and the inorganic binder.

In the compositions and methods of the present disclosure, the quantum dots have an emission wavelength in the UV-Vis-NIR spectral region. The quantum dots comprise semiconductor nanoparticles from Groups II-VI, III-V, IV-VI of the periodic table, perovskite quantum dots, and combinations thereof. The semiconductor nanoparticles comprise one or more selected from the group consisting of gallium nitride (GaN), gallinium phosphide (GaP), gallinium arsenide (GaAs), indium phosphide (InP), indium arsenide (InAs) from group III-V, zinc oxide (ZnO), zinc sulfide (ZnS), cadmium sulfide (CdS), cadmium selenide (CdSe), cadmium tellenium (CdTe) from group II-VI, and lead selenide (PbSe), lead sulfide (OBS), lead telluride (PbTe), tin telluride (SnTe), tin sulfide (SnS) from group IV -VI. The inorganic binder may be selected from the group consisting of phosphates, polyphosphates, carbonates, sulfates, borates, polyborates, aluminates, titanates, and silicates. In some examples of the present disclosure, the composition is an inorganic ceramic paint.

Further areas of applicability and various methods of enhancing the above technology will become apparent from the description provided herein. The description and specific examples in this summary are intended for purposes of illustration only and are not intended to limit the scope of the present disclosure.

### BRIEF DESCRIPTION OF DRAWINGS

The patent or application file contains at least one drawing executed in color. Copies of this patent or patent application publication with color drawing(s) will be provided by the Office upon request and payment of the necessary fee.

The present teachings will become more fully understood from the detailed description and the accompanying drawings wherein:
FIG. 1 is an illustration of QD on a 3-D scaffold.
FIG. 2 is an illustration of a quantum dot with a core/shell structure.
FIGS. 3A-3B are illustrations of fluorescent images from 540 nm (green) and 650 nm (red) emitting QDs applied on surfaces of paint 1 (3A) and paint 2 (3B) upon illuminating with 365 nm long pass light.
FIGS. 4A and 4B are a graphical illustration of the comparison of reflectance spectra of the paint of Sample 1 and the paint of Sample 2.
FIGS. 5A-5D are images of the QD dry metal oxide powder.
FIG. 6 is an image of 650 nm QD-Zirconium paint applied on a typical aluminum surface.
FIG. 7 is a graphical illustration of the overall radiance of synthesized QD650-ZrO₂ paint containing different concentrations of QDs when excited using a 405 nm monochromatic light source.
FIG. 8 is an image of an aluminum panel applied with QD650-ZrO₂ paint under 365 nm long-band UV excitation.

It should be noted that the figures set forth herein are intended to exemplify the general characteristics of the methods, algorithms, and devices among those of the present technology, for the purpose of the description of certain examples. These figures may not precisely reflect the characteristics of any given example and are not necessarily intended to define or limit specific examples within the scope of this technology. Further, certain examples may incorporate features from a combination of figures.

### DESCRIPTION

Quantum dots (QDs) are semiconductor nanoparticles that emit light when excited by a light energy source. Quantum dots have unique properties due to their extremely small size and structure wherein the electrons are confined and can only occupy defined energy levels, an effect known as quantum confinement. Due to the quantum confinement effect, quantum dots have unique optical, electronic, and chemical properties that are not observed in other isolated molecules and bulk materials. Some characteristic properties of quantum dots include a wide absorbance range, a narrow fluorescence wavelength, bright photoluminescence, stability against photobleaching, and size-dependent emission in the UV-Vis-NIR spectrum. Due to their unique optical properties, quantum dots (QDs) are used in a wide range of applications such as large area displays, sensors, imaging, self-assembly, photovoltaic cells, fluorescent inks and paints, and biological and industrial tracers.

One approach to improving fluorescent intensity for quantum dot assemblies involves the use of a locally enhanced electromagnetic field, such as surface plasmon polaritons (SPPs) on the surface of a metal substrate. By placing quantum dots in close proximity to surface plasmon-supporting metal substrates it is possible to increase their emission by taking advantage of localized high surface fields. For example, SPPs produced by gold nanoparticles are known to excite QDs. However, gold nanoparticles and similar metal surfaces have SPPs only in the visible and IR wavelength region. Moreover, gold metal nanoparticles and similar metal nanoparticles have strong absorption throughout the UV-Vis region leading to competitive absorption of the excitation light source. QDs generally have broad absorption bands extending into the UV region. This UV absorption of QDs is unperturbed by the SPPs in the visible and IR region.

The present disclosure provides compositions and methods for modifying and/or enhancing the fluorescence and/or radiance features of semiconductor nanoparticles, such as quantum dots, by immobilizing the semiconductor nanoparticles on a highly reflective surface. In some examples, metal oxides are employed as epicenters for the creation of near-field electromagnetic radiation wherein QDs are assembled on the surfaces of the metal oxides which enhances the emission of the QDs. The ability to enhance the emission of QDs is dependent on the reflectance capability of the metal oxide surface. The compositions and methods of the present disclosure can be used for various applications such as large area displays, sensors, imaging, self-assembly, photovoltaic cells, fluorescent inks and paints, and biological and industrial tracers.

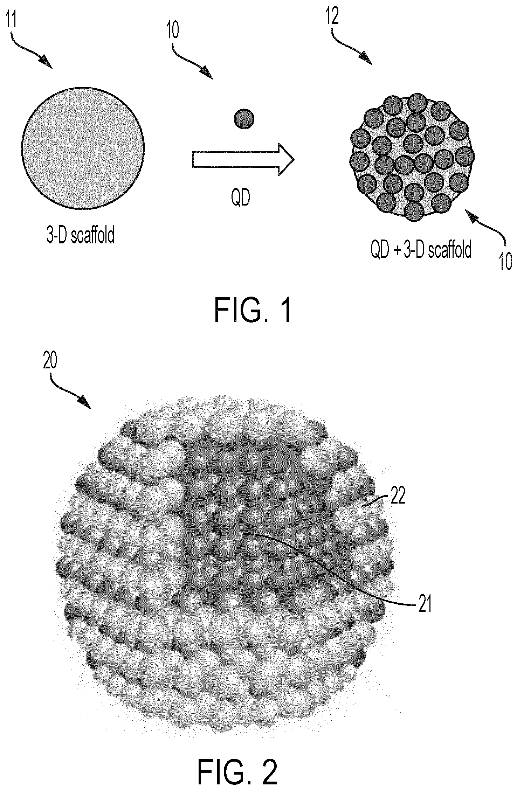

Compositions and methods of the present disclosure achieve the immobilization of semiconductor nanoparticles, such as QDs, either actively or passively, on a reflective nanoparticle scaffold possessing large surface to volume ratio. The reflective nanoparticle scaffold has a 3-D nano/microstructure. FIG. 1 is a representation of a semiconductor nanoparticle 10 immobilized on the surface of a 3-D nanoparticle scaffold 11, such as a metal oxide nanoparticle forming semiconductor nanoparticle-doped metal oxide particles 12.

The compositions of the present disclosure comprise semiconductor nanoparticles, such as QDs, which are suspended in a slurry mixture of water and an inorganic binder. Nanoparticles are extremely small particles having a diameter in the range of 1-500 nm. In some examples, the nanoparticles have a diameter in the range of 1-300 nm, 1-100 nm, 1-50 nm, 1-20 nm, less than 10 nm, or less than 5 nm. Because of their small size, nanoparticles have unique optical, electronic, and mechanical properties compared to their corresponding bulk material. The term "nanoparticles" as used in the present disclosure includes nanoparticles (NP), nanocrystals (NC), and semiconductor particles, such as quantum dots. Examples of nanoparticles include compositions of metals; metal oxides, hydroxides, sulfides, phosphates, fluorides, and chlorides; carbon nanoparticles; and semiconductor nanoparticles. Nanoparticles of the present disclosure also include anisotropic nanomaterials.

Examples of metal nanoparticles include but are not limited to gold, silver, platinum, titanium, zinc, cerium, iron, and thallium. Examples of metal oxide nanoparticles, include but are not limited to iron oxide (Fe₂O₃), titanium oxide (TiO₂), vanadium oxide (VO₂), tantalum oxide (Ta₂O₅), and zirconium oxide (ZrO₂).

Semiconductor nanoparticles, also referred to as nanocrystals, are made from a variety of different compounds. They are referred to as II-VI, III-V, or IV-VI semiconductor nanoparticles, perovskite quantum dots, and combinations thereof. II-VI, III-V, or IV-VI semiconductor nanoparticles are based on the periodic table groups into which these elements are categorized. Germanium, tin, and lead are group IV elements with PbSe, PbS, PbTe as IV-VI semiconductor examples, GaN, GaP, GaAs, InP and InAs are III-V examples, while those of ZnO, ZnS, CdS, CdSe and CdTe are II-VI semiconductors. Thus, the semiconductor nanoparticles include gallium nitride (GaN), gallinium phosphide (GaP), gallinium arsenide (GaAs), indium phosphide (InP), indium arsenide (InAs) from group III-V, zinc oxide (ZnO), zinc sulfide (ZnS), cadmium sulfide (CdS), cadmium selenide (CdSe), cadmium tellenium (CdTe) from group II-VI, and lead selenide (PbSe), lead sulfide (OBS), lead telluride (PbTe), tin telluride (SnTe), tin sulfide (SnS) from group IV -VI.

Quantum dots employed in some examples of the present disclosure are semiconductor nanocrystals that have unique optical, electronic, and chemical properties that are not observed in other isolated molecules and bulk materials. Some characteristic properties of quantum dots include a wide absorbance range, a narrow fluorescence wavelength, stability against photobleaching, and size-dependent emission.

For the same materials system, the smaller the quantum dot, the shorter the fluorescent wavelength. For example, CdSe quantum dots with a nominal diameter of 2.8 nm show a fluorescence at 535 nm, while quantum dots of 5.6 nm CdSe crystals have an emission centered at 640 nm. Quantum dots of lead selenide of various diameters can emit fluorescence in the near-infrared range.

QDs can be single-component nanoparticles with uniform internal compositions as selenides or sulfides (chalcogenides). The electroluminescence and optical core-type QDs properties can be tunable by any simple change in QD size. Semiconductor nanoparticles can also have a core/shell structure 20, wherein small regions of one material are embedded with another bandgap material, such as illustrated in FIG. 2, cadmium selenium zinc sulfide (CdSeZnS) nanoparticles 20 wherein CdSe forms the core 21 and ZnS forms the shell 22 of the quantum dot structure. Other examples of semiconductor nanoparticles having a core/shell structure include cadmium sulfide zinc sulfide (CdSZnS), Indium arsenide zinc selenide (InAsZnSe).

Perovskite quantum dots are semiconducting nanocrystals. Compared to metal chalcogenide quantum dots, perovskite quantum dots are more tolerant to defects and have excellent photoluminescence quantum yields and high color purity (i.e., narrow emission linewidths of ~10 nm for blue emitters and 40 nm for red emitters). Perovskite quantum dots have the potential for a range of applications in electronics, optoelectronic, and nanotechnology.

Nanoparticles of the present disclosure also include materials of diverse shape in the nanoscale regime, such as anisotropic nanomaterials. The term "anisotropic nanomaterials" refers to a class of materials in which their properties are direction-dependent and more than one structural parameter is needed to describe them. Anisotropic materials are categorized based on dimensionality as 1-, 2-, and 3D nanostructures. Anisotropic materials, include but are not limited to nanoparticles with a variety of shapes, encompassing one-dimensional nanorods, nanowires, and nanotubes; two-dimensional plates, sheets, and ribbons; and three-dimensional pyramids, stars, flowers, multi-pods, nanourchins, tadpoles, nanocages, nanorice, nanocorns, nanoboxes, nanocubes, triangular nanoframes, nano dumbbells, platelets, rings, polyhedra, and the like.

In some examples of the present disclosure, the semiconductor nanoparticles are quantum dots that are assembled and immobilized on surfaces of metal oxide nanoparticles, forming quantum dot-doped metal oxide nanoparticles. When the size of semiconductor nanoparticles is reduced to the nanoscale, such as in quantum dots, their physical and chemical properties change drastically, resulting in unique properties due to their large surface area or quantum size effect. Quantum dots have a particle diameter in the range of 2-10 nm, or more preferably 1-5 nm. The emission of quantum dots can cover the whole visible range and near-infrared range (from 400 nm to 3000 nm).

For example, QDs composed of II-IV semiconductors emit light in the visible spectral region and their wavelength can be tuned by optimizing the corresponding nanoparticle size. Unlike organic fluorescent dyes, QDs have high absorption cross section, high quantum yield, high photostability, and narrow emission bands. Within the scope of the present disclosure, it is possible to incorporate differently sized QDs in an array and create patterns that can be uniquely utilized for multiplexed imaging. Generally, as QD size decreases, the energy difference between the highest valence band and the lowest conduction band increases. Hence, dot excitation needs more energy, resulting in a corresponding high energy (blue) emission.

Quantum dots are typically hydrophobic and prepared by sophisticated solution chemical processes. To prevent aggregation and precipitation which can lead to loss of brightness or fluorescence, quantum dots are typically stored in organic solvents. Additionally, exposure to water and or oxygen tends to cause a loss of photoluminescence and brightness. In addition, QDs that are usually prepared in an organic phase undergo additional surface modification with an organic compound to render them water-dispersible for some applications, such as biomedical applications. Typically, QDs synthesized in organic solvents lose almost 30% of quantum yield after phase transfer into aqueous media.

Surprisingly, the compositions of the present disclosure, which are made from inorganic components do not exhibit quenching and have enhanced brightness in an aqueous solution. In some examples of the present disclosure, quantum dot-doped metal oxide particles of the present disclosure are used as a pigment in aqueous paints and inks. For example, when the solvent is evaporated from the quantum dot-doped metal oxide nanoparticles of the present disclosure, dried quantum dot-doped metal oxide pigment nanoparticles are formed. The dried quantum dot-doped metal oxide pigment nanoparticles in powder form are then mixed with an inorganic binder and water to form an aqueous quantum dot composition for a fluorescent coating of the present disclosure. The inorganic binder can be selected based on adhesion strength, safety, and stability. Suitable inorganic binders include but are not limited to phosphates, polyphosphates, carbonates, sulfates, borates, polyborates, aluminates, titanates, and silicates. Examples of suitable inorganic binders include but are not limited to sodium phosphate, sodium polyphosphate, calcium aluminate, potassium silicate, sodium silicate, and alumina silicate.

In some examples of the compositions of the present disclosure, the quantum dot-doped metal oxide pigment is suspended in a slurry mixture of the water and the inorganic binder.

The present disclosure provides a method for making a quantum dot fluorescent coating of the disclosure comprising mixing organic soluble quantum dots in a solvent with a metal oxide; evaporating the solvent to form a dry quantum dot-doped metal oxide pigment; mixing the quantum dot-doped metal oxide pigment with an inorganic binder and water to form an aqueous quantum dot fluorescent coating; and applying the aqueous quantum dot fluorescent coating to a substrate.

The present disclosure also provides a method for enhancing the fluorescence intensity of quantum dots. The method comprises mixing organic soluble quantum dots in a solvent with a metal oxide; evaporating the solvent to form a dry quantum dot-doped metal oxide pigment; mixing the quantum dot-doped metal oxide pigment with an inorganic binder, and water to form a coating comprising quantum dot-doped metal oxide pigments; applying the coating to a substrate to obtain a pigment coated substrate; and illuminating the pigment coated substrate with a light source.

In the methods of the present disclosure, the quantum dot-doped metal oxide pigment comprises quantum dots assembled and immobilized on surfaces of metal oxide particles. In some examples of the present disclosure, the quantum dot-doped metal oxide pigment is suspended in a slurry mixture of the water and the inorganic binder. In some examples, the quantum dot has an emission wavelength in the UV-Vis-NIR spectrum.

The quantum dots comprise semiconductor nanoparticles from Groups II-VI, III-V, IV-VI of the periodic table, perovskite quantum dots, and combinations thereof. The semiconductor nanoparticles include gallium nitride (GaN), gallinium phosphide (GaP), gallinium arsenide (GaAs), indium phosphide (InP), indium arsenide (InAs) from group III-V, zinc oxide (ZnO), zinc sulfide (ZnS), cadmium sulfide (CdS), cadmium selenide (CdSe), cadmium tellenium (CdTe) from group II-VI semiconductors, and lead selenide (PbSe), lead sulfide (OBS), lead telluride (PbTe), tin telluride (SnTe), tin sulfide (SnS) from group IV -VI. The inorganic binder may include but is not limited to phosphates, polyphosphates, carbonates, sulfates, borates, polyborates, aluminates, titanates, and silicates. In some examples, the aqueous quantum dot fluorescent coating of the present disclosure is an inorganic ceramic paint.

Quantum dot compositions for fluorescent coatings of the present disclosure have an emission wavelength in the UV-Vis-NIR spectral region. The present disclosure provides a method to enhance the fluorescence intensity of a QD sample by concurrently creating near-field excitation energy in the UV-Vis-IR spectral region within the sample in addition to the illumination light source by immobilizing quantum dots on a highly reflective surface. The quantum dot-doped metal oxide particles of the present disclosure are employed as a pigment in aqueous paints and inks. The quantum dot-doped metal oxide particles of the present disclosure can also be used for other non-aqueous coatings.

Immobilization of quantum dots on a scaffold of the present disclosure can be achieved by direct deposition, such as by depositing a solution of quantum dots onto a surface having a metal oxide ceramic paint coating applied and cured thereon (method 1), or by suspension (method 2) such as by suspending a quantum dot-doped metal oxide pigment in a slurry mixture of water, and an inorganic binder.

### Method 1: Direct Deposition Method

The method involves the direct deposition of a QD solution onto a cured metal oxide ceramic paint coated surface. The ceramic paint can be composed of various oxides of Al, Ga, Gd, Mg, Co, Ge, Hf, Fe, Ni, Nb, Mo, La, Re, Sc, Si, Ti, Ta, V, W, Y, Zr, and Sc or their combinations thereof. Examples of metal oxides include, but are not limited to cobalt oxide (CO₂O₃,), gallium oxide (Ga₂O₃), geranium oxide (GeO₂), hafnium oxide (HfO₂), iron oxide (Fe₂O₃), nickel oxide (NiO₂), niobium oxide (Nb₂O₅), molybdenum oxide (Mo₂O₃), lanthanum oxide (La₂O₃), rhenium oxide (Re₂O₃), scandium oxide (Sc₂O₃), silicon oxide (SiO₂), titanium oxide (TiO₂), tantalum oxide (Ta₂O₅), vanadium oxide (VO₂), tungsten oxide (WO₂), yttrium oxide (Y₂O₃), zirconium dioxide (ZrO₂), and scandinium oxide (S_{C2}O₃). In some examples, the metal oxide is aluminum oxide (Al₂O₃), iron oxide (Fe₂O₃), tantalum oxide (Ta₂O₅), titanium dioxide (TiO₂), vanadium dioxide (VO₂), or zirconium dioxide (ZrO₂).

The quantum dot solution can be applied by known methods such as drop casting, pipetting, or ink-jet printing. By this method, the QD solution spreads evenly and immediately onto the ceramic paint coated surface of the substrate, forming a fluorescent coating 35, and resulting in more uniform distribution, enhanced fluorescence intensity, reflectance properties and overall radiance of the deposited quantum dot composition of the present disclosure.

### Method 2: Suspension Method

In the suspension method of the present disclosure, organic soluble quantum dots, e.g., CdSe, CdS, ZnS, of a predetermined wavelength within the range of 400-2000 nm selected based on the end application, in a suitable solvent, such as toluene, tetrahydrofuran, or hexane, are mixed with a metal oxide powder. The solvent is evaporated from the quantum dots forming a dry quantum dot-doped metal oxide pigment. The solvent can be evaporated from the quantum dots by known methods. In some examples, the solvent is allowed to evaporate after equilibrating the mixture of the quantum dots in the solvent with the metal oxide powder. In other examples, the solvent can be evaporated by purging the mixture with nitrogen followed by removal of the solvent, i.e., flash off, under reduced pressure (e.g., 10⁻² torr or less). Another method for evaporating the solvent from the QD-metal oxide mixture is by using a rotary evaporator where the material in a suitable container is connected to the rotary evaporator which exposes the material to high temperature and reduced pressure simultaneously.

The dried quantum dot-doped metal oxide pigment is mixed with an inorganic binder and water. In some examples of the present disclosure, the inorganic binder and water are mixed to form a slurry mixture and the quantum dot-doped metal oxide pigment is mixed with the slurry mixture to suspend the quantum dot-doped metal oxide pigment in the slurry mixture. The resultant suspension is an aqueous fluorescent coating composition that can be applied as a paint or coating to a substrate.

The aqueous quantum dot fluorescent coating composition of the present disclosure is an all-inorganic composition ceramic coating. Ceramic coatings, unlike coatings based on polymer resins, are inorganic coatings. These non-metallic coatings have unique properties such as high heat, abrasion/wear, and chemical resistance. By choosing the right composition of elements, it is possible to create coatings with customized properties that meet the needs of a wide range of industrial applications. Common ceramic coatings include alumina (i.e., aluminum oxide), titania (i.e., titanium oxide), zirconia (i.e., zirconium oxide), alumina-magnesia, hafnia, silicon carbide, silicon nitride, and boron carbide, as well as oxides of many of these materials. Ceramic coatings can be applied at thicknesses ranging from a few to several hundred microns. Common application methods include physical vapor deposition (PVD), chemical vapor deposition (CVD), thermal spraying, plasma spraying dipping, sol gel, micro-oxidation, packed diffusion, ionic beam surface treatment, and laser assisted techniques. Ceramic coatings are generally applied to metal surfaces to protect them from wear and tear, damage due to high temperatures, and/or corrosion and chemical attack in harsh environments. The choice of a specific ceramic coating depends on the substrate to be protected and the conditions against which protection must be provided. The properties of the base metal, including its metallurgy, hardness, toughness, and thermal stability, should be considered. The environment, including contact pressures, temperatures, whether abrasive wear is an issue, and if so, the nature of the wear, whether reduce friction is required, etc., are all important factors.

The highly fluorescent coatings of the present disclosure have all the unique optical properties of QDs making them ideal for use in photovoltaic solar cells, light emitting diodes (LEDs), large area displays, sensors, imaging, self-assembly fluorescent inks, fluorescent paints, and biological and industrial tracers. Due to their high heat, abrasion/wear, and chemical resistance properties, the compositions and methods of the present disclosure are useful as tracers for tracking objects under extreme environmental conditions.

The all-inorganic ceramic paints of the present disclosure can also be used to test surfaces of aircraft, vehicles, infrastructure, and spare parts, etc., for structural defects or damage. For example, the paint can be applied to the surface of an object such as an airplane fuselage to check for airworthiness, a bridge structure to check the bridge's structural integrity, or the surface of 3D-printed or composite part to check for defects by analyzing light emitted by the paint.

### Examples

Various features of the present disclosure are further illustrated with respect to the following examples.

### Example 1: Direct deposition of QDs onto a metal oxide coated surface.

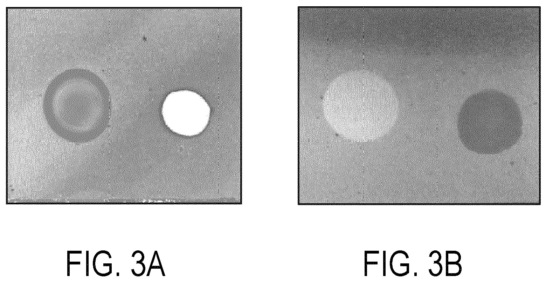

Two (2) aluminum substrates of similar size were coated with a white metal oxide ceramic paint and cured under ambient conditions (30 to 60 %RH and 70 ± 5 ºF for 7 days. 10 µL of 540 nm QDs in toluene were applied by pipetting or inkjet printing onto the cured painted surface of the substrate (Sample 1). 10 µL of 650 nm QDs in toluene were applied by pipetting or inkjet printing onto the cured painted surface of the substrate (Sample 2). Both Sample 1 and Sample 2 were illuminated under a 365 nm long pass light source. Images were captured under identical conditions. FIGS. 3A and 3B show the fluorescent images from 540 nm (green) and 650 nm (red) emitting QD's on the white ceramic painted surface of Sample 1 (FIG. 3A) and on the surface of the white ceramic pained surfaces of Sample 2 (FIG. 3B) after illumination with 365 nm long pass light, i.e., with all visible spectral wavelength above 365 nm.

The compositions of the ceramic paint employed in Sample 1 and the ceramic paint employed in Sample 2 were identical except for the type of metal oxide filler/pigment used. From a visual inspection, it can be seen that the fluorescence intensity for both 540 nm and 650 nm emitting quantum dots is higher from the painted surface of Sample 1 compared to the intensities from the painted surface of Sample 2 in both FIG. 3A and FIG. 3B.

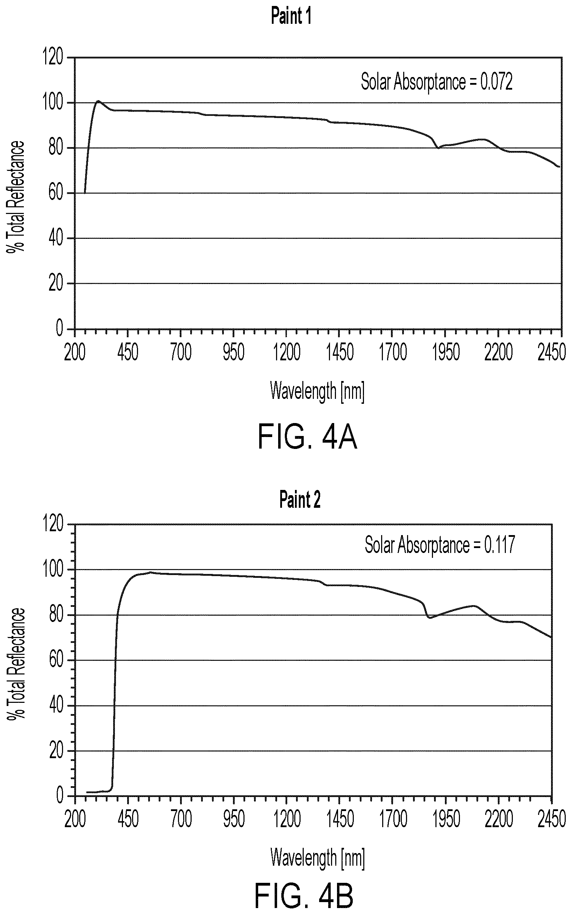

The absorptance/reflectance characteristics of the two ceramic paints applied in Sample 1 and Sample 2 in FIGS. 3A and 3B, respectively, were measured using a UV-Vis-NIR spectrophotometer. While the total solar absorptance of the ceramic paint in Sample 1 (i.e., 0.072) is lower than that for the ceramic paint in Sample 2 (i.e., 0.117), the ceramic paint in Sample 1 has strong reflectance in the UV region (up to 250 nm) of 100% (or about 100 %) at 365 nm (excitation light source onset). In the case of the ceramic paint employed in Sample 2, the reflectance dramatically decreases in the UV region to 2% (or about 2%) at 365 nm (excitation light source onset). FIGS. 4A and 4B show a comparison of reflectance spectra of the paint of Sample 1 to the paint of Sample 2. Thus, under identical illumination conditions, QDs applied on the ceramic paint of Sample 1 are excited more effectively with the reflected light coming from the metal oxide fillers/pigments.

The radiance from the QDs of the ceramic paints of Samples 1 and 2 emitting 650 nm upon excitation with two different light sources was measured using a spectrophotometer and is summarized in Table 1 below. When a 405 nm monochromatic light source was used, the ceramic paint employed in Sample 1 had a significant advantage over the ceramic paint employed in Sample 2 to enhance radiance from the QDs due to its ability to reflect more of the excitation wavelength light. Nevertheless, when excited using a sun radiation source (e.g., Frezzi^{®} Sunlight, a light-emitting diode (LED) with 600 HMI output), the radiance difference from QDs that emit at 650 nm is not as significant. This may be attributed to the broad absorption band of QDs into the visible region.

**Table 1. Comparison of radiance**

| **Paint system** | **Radiance (ex@405 nm) (W/m²/sr/nm)** | **Radiance (ex@Frezzi@ (W/m²/sr/nm)** |
|---|---|---|
| **Paint 1** | 1.0 | 4.8 |
| **Paint 2** | 0.5 | 4.1 |

### Example 2: Quantum dot-doped metal oxide coating

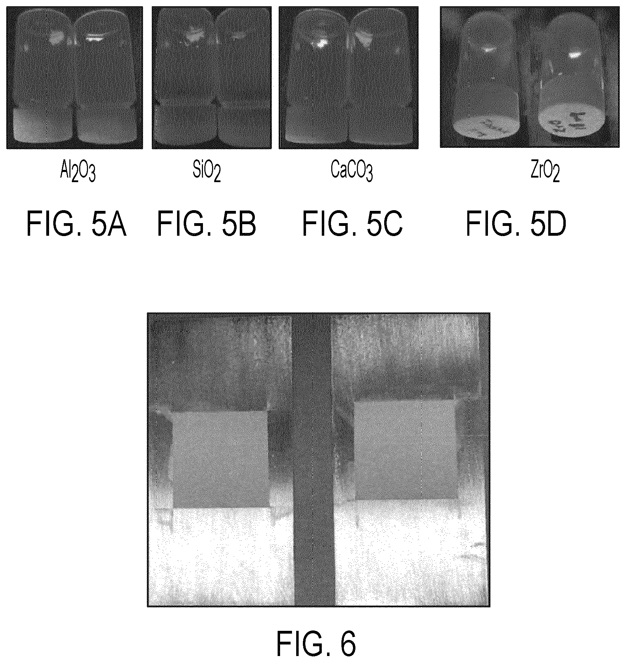

Commercially available organic soluble QD-650 (0.1 mL, 5 mg/mL) in toluene (NNCrystal, LLC) were mixed with the metal oxide powders (25 mg) in Table 2 below. After equilibrating the mixture for 30 minutes, the toluene was allowed to evaporate by purging with nitrogen followed by flash off under reduced pressure (30 ºC for 24 h at -0.09 MPa). Images of examples of dry quantum dot-doped metal oxide pigments of the present disclosure using red and green QDs are shown in FIGS. 5A (alumina), 5B (silica), 5C (calcium carbonate), and 5D (zirconia).

The resultant dried quantum dot-doped metal oxide powder (100 mg) was used as a pigment and thoroughly mixed with a slurry of potassium silicate (0.025 mL), i.e., an inorganic binder, and water (0.06 ml), and mill media using a paint mixer for ten minutes. The resulting slurry was used to formulate inorganic ceramic aqueous coatings/paints of the present disclosure. Examples of radiance measured for ceramic coatings using pigments formulated with various metal oxides and QD-650 are summarized in Table 2.

**Table 2.**

| **QD Metal oxide** | **Radiance (ex@405 nm) (W/m²/sr/nm)** | **Radiance (ex@Frezzi^{®} (W/m²/sr/nm)** |
|---|---|---|
| **Zirconia 100** | 1.528572 | 8.608012 |
| **Lanthanum Oxide** | 1.051804 | 5.563263 |
| **Titania** | 1.004483 | 5.561573 |
| **Magnesium Oxide** | 1.389951 | 6.930368 |
| **Alumina** | 0.977095 | 4.959909 |

This table demonstrated the ability to tune the overall radiance of the ceramic paint by tuning the reflectance capability of the metal oxide used in the formulation.

### Example 3: Optical properties of the-all inorganic ceramic aqueous coatings

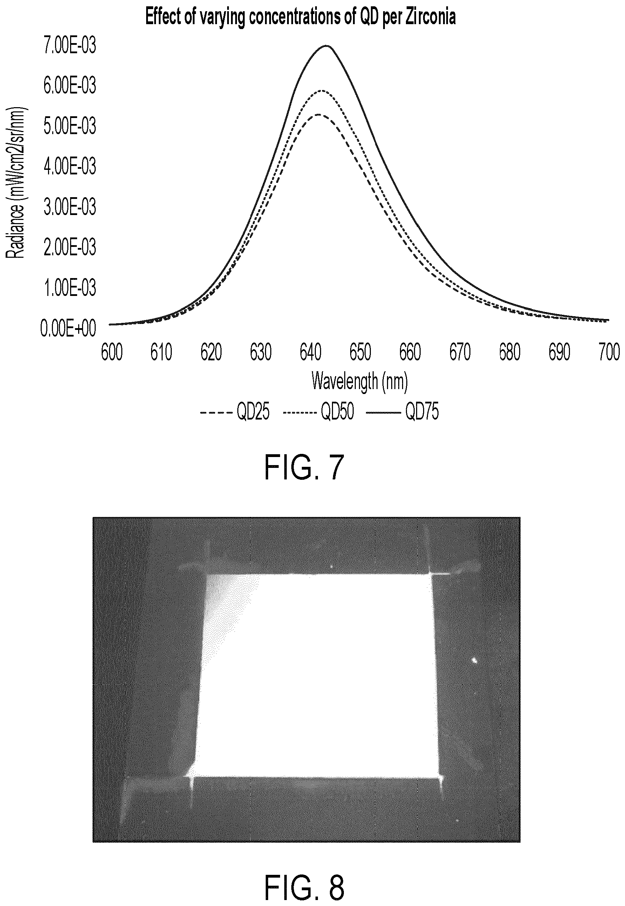

The surface of an aluminum substrate was cleaned using acetone to remove contaminants. The aluminum surface was abraded using a 150 grit size sandpaper and black residue removed using wet cloth wipes. 650 nm QD-zirconia coatings according to the present disclosure having varying concentrations of QDs were painted on the surfaces of aluminum substrates. FIG. 6 includes images of the QD650-zirconia painted aluminum substrate showing the visual appearance of QD doped ceramic paint. FIG.7 shows the effect on the overall radiance of the QD650-zirconia paints upon excitation with a 405 nm monochromatic light source as measured using a spectrophotometer and plotted as a function of the varying concentrations of QDs in the QD-zirconia coating. It is obvious from the plot that the overall radiance of the QD paint is proportional to the concentration of QD in the system. The ceramic QD-650 paint did not exhibit radiance levelling off or radiance quenching in any of the formulations. The QD metal-oxide thus has larger capacity to accommodate more QDs into the system. FIG. 8 is a fluorescence image of an aluminum panel having a QD650-ZrO₂ paint applied under 365 nm long-band UV excitation. The bright radiance evolving from the paint under UV excitation as observed with human eye is manifold brighter compared to that from an equivalent quantity of pure QDs.

### Additional Notes and Examples

The present disclosure provides an embodiment wherein in the composition, the quantum dot comprises semiconductor nanoparticles from Groups II-VI, III-V, IV-VI of the periodic table, perovskite quantum dots, and combinations thereof. The semiconductor nanoparticles may comprise one or more selected from the group consisting of cadmium selenide (CdSe), cadmium sulfide (CdS), zinc selenide (ZnSe), and zinc sulfide (ZnS), lead selenide (PbSe), lead sulfide (PbS), and cadmium telluride (CdTe).

In some embodiments, the composition is an inorganic ceramic paint.

The present disclosure also provides an embodiment wherein in the method, the quantum dot comprises semiconductor nanoparticles from Groups II-VI, III-V, IV-VI of the periodic table, perovskite quantum dots, and combinations thereof. The semiconductor nanoparticles comprise one or more selected from the group consisting of cadmium selenide (CdSe), cadmium sulfide (CdS), zinc selenide (ZnSe), and zinc sulfide (ZnS), lead selenide (PbSe), lead sulfide (PbS), and cadmium telluride (CdTe).

In some embodiments, the aqueous quantum dot fluorescent coating is an inorganic As used herein, the phrase at least one of A, B, and C should be construed to mean a logical (A or B or C), using a non-exclusive logical "or." It should be understood that the various steps within a method may be executed in a different order without altering the principles of the present disclosure. Disclosure of ranges includes disclosure of all ranges and subdivided ranges within the entire range.

The headings (such as "Background" and "Summary") and sub-headings used herein are intended only for general organization of topics within the present disclosure and are not intended to limit the disclosure of the technology or any feature thereof. The recitation of multiple examples having stated features is not intended to exclude other examples having additional features, or other examples incorporating different combinations of the stated features.

As used herein, the terms "comprise" and "include" and their variants are intended to be non-limiting, such that recitation of items in succession or a list is not to the exclusion of other like items that may also be useful in the devices and methods of this technology. Similarly, the terms "can" and "may" and their variants are intended to be non-limiting, such that recitation that an example can or may comprise certain elements or features does not exclude other examples of the present technology that do not contain those elements or features.

As used herein, the term "about", in the context of concentrations of components of the formulations, typically means +/-5% of the stated value, more typically +/-4% of the stated value, more typically +/-3% of the stated value, more typically, +/-2% of the stated value, even more typically +/-1% of the stated value, and even more typically +/-0.5% of the stated value.

The broad teachings of the present disclosure can be implemented in a variety of forms. Therefore, while this disclosure includes particular examples, the true scope of the disclosure should not be so limited since other modifications will become apparent to the skilled practitioner upon a study of the specification and the following claims. Reference herein to one example, or various examples means that a particular feature, structure, or characteristic described in connection with an example or particular system is included in at least one example. The appearances of the phrase "in one example" (or variations thereof) are not necessarily referring to the same example. It should be also understood that the various method steps discussed herein do not have to be carried out in the same order as depicted, and not each method step is required in each example.

The foregoing description of the examples has been provided for purposes of illustration and description. It is not intended to be exhaustive or to limit the disclosure. Individual elements or features of a particular example are generally not limited to that particular example, but, where applicable, are interchangeable and can be used in a selected example, even if not specifically shown or described. The same may also be varied in many ways. Such variations should not be regarded as a departure from the disclosure, and all such modifications are intended to be included within the scope of the disclosure.

## Claims

1. A composition for a fluorescent coating, comprising:
a quantum dot-doped metal oxide pigment (12);
an inorganic binder; and
water,
wherein:
the metal oxide is selected from the oxides of aluminum, titanium, zirconium, lanthanum, magnesium, or combinations thereof, and
the quantum dot comprises semiconductor nanoparticles (10), wherein the semiconductor nanoparticles (10) comprise one or more selected from the group consisting of gallium nitride, gallium phosphide, gallium arsenide, indium phosphide, indium arsenide, zinc oxide, zinc sulfide, cadmium sulfide, cadmium selenide, cadmium telluride, lead selenide, lead sulfide, lead telluride, tin telluride, and tin sulfide.

2. The composition according to claim 1, wherein the quantum dot-doped metal oxide pigment (12) comprises quantum dots (10) assembled and immobilized on surfaces of metal oxide particles (11) and, optionally, the quantum dot-doped metal oxide pigment (12) is suspended in a slurry mixture of the water and the inorganic binder.

3. The composition according to claim 1 or 2, wherein the quantum dot (10) has an emission wavelength in the UV-Vis-NIR spectral region.

4. The composition according to any preceding claim, wherein the quantum dots have a particle diameter in the range of 2-10 nm.

5. The composition according to any preceding claim wherein the semiconductor nanoparticles comprise one or more selected from the group consisting of cadmium sulfide, cadmium selenide, cadmium telluride, lead selenide and lead sulfide.

6. The composition according to any preceding claim, wherein the inorganic binder is selected from the group consisting of phosphates, polyphosphates, carbonates, sulfates, borates, polyborates, aluminates, titanates, and silicates.

7. The composition according to any preceding claim, wherein the quantum dots are anisotropic nanomaterials.

8. A method for making a quantum dot fluorescent coating, said method comprising:
mixing organic soluble quantum dots (10) in a solvent with a metal oxide;
evaporating the solvent to form a dry quantum dot-doped metal oxide pigment (12);
mixing the quantum dot-doped metal oxide pigment (12) with an inorganic binder, and water to form an aqueous quantum dot fluorescent coating; and
applying said aqueous quantum dot fluorescent coating to a substrate,
wherein:
the metal oxide is selected from the oxides of aluminum, titanium, zirconium, lanthanum, magnesium, or combinations thereof, and
the quantum dot comprises semiconductor nanoparticles (10), wherein the semiconductor nanoparticles (10) comprise one or more selected from the group consisting of gallium nitride, gallium phosphide, gallium arsenide, indium phosphide, indium arsenide, zinc oxide, zinc sulfide, cadmium sulfide, cadmium selenide, cadmium telluride, lead selenide, lead sulfide, lead telluride, tin telluride, and tin sulfide.

9. The method according to claim 8, wherein the quantum dot-doped metal oxide pigment (12) comprises quantum dots (10) assembled and immobilized on surfaces of metal oxide particles (11) and, optionally, the quantum dot-doped metal oxide pigment (12) is suspended in a slurry mixture of the water and the inorganic binder.

10. The method according to claim 8 or 9, wherein the quantum dot (10) has an emission wavelength in the UV-Vis-NIR spectrum.

11. The method according to any preceding claim, wherein the quantum dots have a particle diameter in the range of 2-10 nm.

12. The method according to any preceding claim wherein the semiconductor nanoparticles comprise one or more selected from the group consisting of cadmium sulfide, cadmium selenide, cadmium telluride, lead selenide and lead sulfide.

13. The method according to any of claims 8 to 12, wherein:
the inorganic binder is selected from the group consisting of phosphates, polyphosphates, carbonates, sulfates, borates, polyborates, aluminates, titanates, and silicates.

14. The method according to any of claims 8 to 13, wherein the quantum dots are anisotropic nanomaterials.

15. A method for enhancing fluorescence intensity of quantum dots, said method comprising: the method for making a quantum dot fluorescent coating of any of claims 9 to 14; and illuminating the pigment coated substrate with a light source.

## Patentansprüche

1. Zusammensetzung für eine fluoreszierende Beschichtung, umfassend:
ein Quantenpunkt-dotiertes Metalloxidpigment (12);
ein anorganisches Bindemittel; und
Wasser,
wobei
das Metalloxid ausgewählt ist aus den Oxiden von Aluminium, Titan, Zirkonium, Lanthan, Magnesium oder Kombinationen davon, und
der Quantenpunkt Halbleiter-Nanopartikel (10) umfasst, wobei die Halbleiter-Nanopartikel (10) ein oder mehrere aus der Gruppe bestehend aus Galliumnitrid, Galliumphosphid, Galliumarsenid, Indiumphosphid, Indiumarsenid, Zinkoxid, Zinksulfid, Cadmiumsulfid, Cadmiumselenid, Cadmiumtellurid, Bleiselenid, Bleisulfid, Bleitellurid, Zinntellurid und Zinnsulfid ausgewählte Materialien umfassen.

2. Zusammensetzung nach Anspruch 1, bei der das Quantenpunkt-dotierte Metalloxidpigment (12) Quantenpunkte (10) umfasst, die auf Oberflächen von Metalloxidpartikeln (11) angeordnet und immobilisiert sind, und bei der das Quantenpunkt-dotierte Metalloxidpigment (12) optional in einer Aufschlämmung aus Wasser und einem anorganischen Bindemittel suspendiert ist.

3. Zusammensetzung nach Anspruch 1 oder 2, bei der der Quantenpunkt (10) eine Emissionswellenlänge im UV-Vis-NIR-Spektralbereich aufweist.

4. Zusammensetzung nach einem der vorhergehenden Ansprüche, bei der die Quantenpunkte einen Partikeldurchmesser im Bereich von 2 bis 10 nm aufweisen.

5. Zusammensetzung nach einem der vorhergehenden Ansprüche, bei der die Halbleiter-Nanopartikel ein oder mehrere aus der Gruppe bestehend aus Cadmiumsulfid, Cadmiumselenid, Cadmiumtellurid, Bleiselenid und Bleisulfid ausgewählte Materialien umfassen.

6. Zusammensetzung nach einem der vorhergehenden Ansprüche, bei der das anorganische Bindemittel aus der Gruppe ausgewählt ist, die aus Phosphaten, Polyphosphaten, Carbonaten, Sulfaten, Boraten, Polyboraten, Aluminaten, Titanaten und Silikaten besteht.

7. Zusammensetzung nach einem der vorhergehenden Ansprüche, bei der die Quantenpunkte anisotrope Nanomaterialien sind.

8. Verfahren zur Herstellung einer fluoreszierenden Quantenpunktbeschichtung, wobei das Verfahren umfasst:
Mischen von organisch löslichen Quantenpunkten (10) mit einem Metalloxid in einem Lösungsmittel;
Verdampfen des Lösungsmittels, um ein trockenes, Quantenpunkt-dotiertes Metalloxidpigment (12) zu bilden;
Mischen des Quantenpunkt-dotierten Metalloxidpigments (12) mit einem anorganischen Bindemittel und Wasser, um eine wässrige fluoreszierende Quantenpunktbeschichtung zu bilden; und
Auftragen der wässrigen fluoreszierenden Quantenpunktbeschichtung auf ein Substrat, wobei das Metalloxid aus den Oxiden von Aluminium, Titan, Zirkonium, Lanthan, Magnesium oder Kombinationen davon ausgewählt ist, und
der Quantenpunkt Halbleiter-Nanopartikel (10) umfasst, wobei die Halbleiter-Nanopartikel (10) ein oder mehrere aus der Gruppe bestehend aus Galliumnitrid, Galliumphosphid, Galliumarsenid, Indiumphosphid, Indiumarsenid, Zinkoxid, Zinksulfid, Cadmiumsulfid, Cadmiumselenid, Cadmiumtellurid, Bleiselenid, Bleisulfid, Bleitellurid, Zinntellurid und Zinnsulfid ausgewählte Materialien umfassen.

9. Verfahren nach Anspruch 8, bei dem das Quantenpunkt-dotierte Metalloxidpigment (12) Quantenpunkte (10) umfasst, die auf Oberflächen von Metalloxidpartikeln (11) angeordnet und immobilisiert sind, und bei dem optional das Quantenpunkt-dotierte Metalloxidpigment (12) in einer Aufschlämmung aus Wasser und einem anorganischen Bindemittel suspendiert wird.

10. Verfahren nach Anspruch 8 oder 9, bei dem der Quantenpunkt (10) eine Emissionswellenlänge im UV-Vis-NIR-Spektrum aufweist.

11. Verfahren nach einem der vorhergehenden Ansprüche, bei dem die Quantenpunkte einen Partikeldurchmesser im Bereich von 2 bis 10 nm aufweisen.

12. Verfahren nach einem der vorhergehenden Ansprüche, bei dem die Halbleiter-Nanopartikel ein oder mehrere aus der Gruppe bestehend aus Cadmiumsulfid, Cadmiumselenid, Cadmiumtellurid, Bleiselenid und Bleisulfid ausgewählte Materialien umfassen.

13. Verfahren nach einem der Ansprüche 8 bis 12, bei dem das anorganische Bindemittel aus der Gruppe ausgewählt ist, die aus Phosphaten, Polyphosphaten, Carbonaten, Sulfaten, Boraten, Polyboraten, Aluminaten, Titanaten und Silikaten besteht.

14. Verfahren nach einem der Ansprüche 8 bis 13, bei dem die Quantenpunkte anisotrope Nanomaterialien sind.

15. Verfahren zur Verstärkung der Fluoreszenzintensität von Quantenpunkten, wobei das Verfahren umfasst:
das Verfahren zur Herstellung einer fluoreszierenden Quantenpunktbeschichtung nach einem der Ansprüche 9 bis 14; und
Beleuchten des mit Pigment beschichteten Substrats mit einer Lichtquelle.

## Revendications

1. Composition pour un revêtement fluorescent, comprenant :
un pigment d'oxyde métallique dopé aux points quantiques (12) ;
un liant inorganique ; et
de l'eau ;
dans laquelle :
l'oxyde métallique est choisi parmi les oxydes d'aluminium, de titane, de zirconium, de lanthane, de magnésium, ou des combinaisons de ceux-ci, et
le point quantique comprend des nanoparticules semi-conductrices (10), les nanoparticules semi-conductrices (10) comprenant un ou plusieurs éléments choisis dans le groupe constitué de nitrure de gallium, phosphure de gallium, arséniure de gallium, phosphure d'indium, arséniure d'indium, oxyde de zinc, sulfure de zinc, sulfure de cadmium, séléniure de cadmium, tellurure de cadmium, séléniure de plomb, sulfure de plomb, tellurure de plomb, tellurure d'étain et sulfure d'étain.

2. Composition selon la revendication 1, dans laquelle le pigment d'oxyde métallique dopé aux points quantiques (12) comprend des points quantiques (10) assemblés et immobilisés sur des surfaces de particules d'oxyde métallique (11) et, facultativement, le pigment d'oxyde métallique dopé aux points quantiques (12) est mis en suspension dans un mélange en suspension de l'eau et du liant inorganique.

3. Composition selon la revendication 1 ou 2, dans laquelle le point quantique (10) présente une longueur d'onde d'émission dans la région spectrale UV-Vis-NIR.

4. Composition selon une quelconque revendication précédente, dans laquelle les points quantiques présentent un diamètre de particule dans la plage de 2 à 10 nm.

5. Composition selon une quelconque revendication précédente, dans laquelle les nanoparticules semi-conductrices comprennent un ou plusieurs éléments choisis dans le groupe constitué de sulfure de cadmium, séléniure de cadmium, tellurure de cadmium, séléniure de plomb et sulfure de plomb.

6. Composition selon une quelconque revendication précédente, dans laquelle le liant inorganique est choisi dans le groupe constitué de phosphates, polyphosphates, carbonates, sulfates, borates, polyborates, aluminates, titanates, et silicates.

7. Composition selon une quelconque revendication précédente, dans laquelle les points quantiques sont des nanomatériaux anisotropes.

8. Procédé de fabrication d'un revêtement fluorescent à points quantiques, ledit procédé consistant à :
mélanger des points quantiques organiques solubles (10) dans un solvant avec un oxyde métallique ;
évaporer le solvant pour former un pigment d'oxyde métallique dopé aux points quantiques sec (12) ;
mélanger le pigment d'oxyde métallique dopé aux points quantiques (12) avec un liant inorganique, et de l'eau pour former un revêtement fluorescent à points quantiques aqueux ; et
appliquer ledit revêtement fluorescent à points quantiques aqueux sur un substrat,
dans lequel :
l'oxyde métallique est choisi parmi les oxydes d'aluminium, de titane, de zirconium, de lanthane, de magnésium, ou des combinaisons de ceux-ci, et
le point quantique comprend des nanoparticules semi-conductrices (10), les nanoparticules semi-conductrices (10) comprenant un ou plusieurs éléments choisis dans le groupe constitué de nitrure de gallium, phosphure de gallium, arséniure de gallium, phosphure d'indium, arséniure d'indium, oxyde de zinc, sulfure de zinc, sulfure de cadmium, séléniure de cadmium, tellurure de cadmium, séléniure de plomb, sulfure de plomb, tellurure de plomb, tellurure d'étain, et sulfure d'étain.

9. Procédé selon la revendication 8, dans lequel le pigment d'oxyde métallique dopé aux points quantiques (12) comprend des points quantiques (10) assemblés et immobilisés sur des surfaces de particules d'oxyde métallique (11) et, facultativement, le pigment d'oxyde métallique dopé aux points quantiques (12) est mis en suspension dans un mélange en suspension de l'eau et du liant inorganique.

10. Procédé selon la revendication 8 ou 9, dans lequel le point quantique (10) présente une longueur d'onde d'émission dans le spectre UV-Vis-NIR.

11. Procédé selon une quelconque revendication précédente, dans lequel les points quantiques présentent un diamètre de particule dans la plage de 2 à 10 nm.

12. Procédé selon une quelconque revendication précédente, dans lequel les nanoparticules semi-conductrices comprennent un ou plusieurs éléments choisis dans le groupe constitué de sulfure de cadmium, séléniure de cadmium, tellurure de cadmium, séléniure de plomb et sulfure de plomb.

13. Procédé selon l'une quelconque des revendications 8 à 12, dans lequel :
le liant inorganique est choisi dans le groupe constitué de phosphates, polyphosphates, carbonates, sulfates, borates, polyborates, aluminates, titanates, et silicates.

14. Procédé selon l'une quelconque des revendications 8 à 13, dans lequel les points quantiques sont des nanomatériaux anisotropes.

15. Procédé pour améliorer l'intensité de fluorescence de points quantiques, ledit procédé comprenant :
le procédé de fabrication d'un revêtement fluorescent à points quantiques selon l'une quelconque des revendications 9 à 14 ; et
l'éclairage du substrat revêtu de pigment avec une source de lumière.
